# FASCICULE DE BREVET EUROPEEN

(11) **EP 4 026 463 B1**
(45) Date de publication et mention de la délivrance du brevet: **16.08.2023**
(21) Numéro de dépôt: 21213601.4
(22) Date de dépôt: 10.12.2021
(51) Int. Cl.: A47J 45/07

(54) **POIGNEE AMOVIBLE PRESENTANT UN ASSEMBLAGE OPTIMISE**
ABNEHMBARER GRIFF MIT OPTIMIERTEM ZUSAMMENBAUVERFAHREN
REMOVABLE HANDLE HAVING AN OPTIMISED ASSEMBLY

(30) Priorité: 07.01.2021 FR 2100139
(43) Date de publication de la demande: 13.07.2022
(73) Titulaire: SEB S.A., 69130 Ecully (FR)
(72) Inventeur: BOUVET, Michel, 74150 Rumilly (FR); GRUAZ, Denis, 74370 Villaz (FR); MONTGELARD, Michel, 73100 Aix-les-Bains (FR)
(74) Mandataire: SEB Développement

(56) Documents cités:
- EP-A1- 2 484 256
- EP-A1- 2 494 896
- EP-B1- 1 523 264
- EP-B1- 3 319 497

## Description

### Domaine technique

La présente invention concerne une poignée amovible destinée à coopérer avec un récipient de cuisson, le récipient de cuisson tel une casserole, une poêle ou un fait-tout, ayant une paroi latérale qui est prolongée vers le haut par une portion recourbée vers l'extérieur.

### Etat de la technique

Il est connu du document EP3319497 une poignée amovible destinée à coopérer avec un récipient de cuisson ayant une paroi latérale qui est prolongée vers le haut par une portion recourbée vers l'extérieur comportant une extrémité libre. La poignée amovible s'étend selon une direction longitudinale et comprend un organe d'appui interne et un organe d'appui externe destiné à venir contre, respectivement, une surface intérieure et une surface extérieure de la paroi latérale, ainsi qu'un organe d'appui supérieur destinés à venir contre l'extrémité libre de la portion recourbée. La poignée amovible comprend un verrou mobile en translation entre une position ouverte et une position fermée, le verrou comportant une paroi de blocage destinée à être éloignée de l'organe d'appui interne dans la position ouverte du verrou et destinée à générer une force sur l'extrémité libre dans la position fermée du verrou, sous l'action d'un moyen de mise en pression. La poignée amovible comporte un corps de préhension qui s'étend selon la direction longitudinale et une pièce de structure qui comporte l'organe d'appui interne et l'organe d'appui supérieur.

Le montage d'une telle poignée amovible se fait en rapportant les différentes pièces dans le corps de préhension dans plusieurs directions, ce qui impose des retournements du corps de préhension.

De plus, l'assemblage de la pièce de structure et du verrou sur le corps de préhension est réalisé par vissage. Ainsi, le montage d'une telle poignée amovible avec des opérations de vissage et des retournements du corps de préhension est très difficile à automatiser. Une opération de vissage peut également engendrer des problèmes de fiabilité de fonctionnement de la poignée amovible dans le temps, si la vis se desserre progressivement.

### Résumé de l'invention

La présente invention vise à remédier à ces inconvénients.

Le problème technique à la base de l'invention consiste à proposer une poignée amovible destinée à coopérer avec un récipient de cuisson qui soit de conception simple et économique à mettre en oeuvre.

Un autre but de l'invention est de proposer une poignée amovible qui présente un fonctionnement fiable dans le temps.

A cet effet, l'invention a pour objet une poignée amovible destinée à coopérer avec un récipient de cuisson ayant une paroi latérale qui est prolongée vers le haut par une portion recourbée vers l'extérieur comportant une extrémité libre, ladite poignée amovible s'étendant selon une direction longitudinale et comprenant un organe d'appui interne et un organe d'appui externe destiné à venir contre, respectivement, une surface intérieure et une surface extérieure de la paroi latérale, ainsi qu'un organe d'appui supérieur destinés à venir contre l'extrémité libre de la portion recourbée, ladite poignée amovible comprenant un verrou mobile en translation entre une position ouverte et une position fermée, le verrou comportant une paroi de blocage destinée à être éloignée de l'organe d'appui interne dans la position ouverte du verrou et destinée à générer une force sur l'extrémité libre dans la position fermée du verrou, sous l'action d'un moyen de mise en pression, ladite poignée amovible comportant un corps de préhension qui s'étend selon la direction longitudinale et une pièce de structure qui comporte l'organe d'appui interne et l'organe d'appui supérieur, caractérisée en ce que la pièce de structure et le verrou forme un sous-ensemble et en ce que le corps de préhension comporte un logement de réception du sous-ensemble, le logement comprenant un orifice d'introduction agencé dans une face avant du corps de préhension et dimensionné pour permettre l'assemblage du sous-ensemble dans le corps de préhension par insertion le long de la direction longitudinale.

Ainsi, la réalisation d'un sous-ensemble permet de bien maitriser le fonctionnement du verrou par rapport au corps de préhension. De plus, l'insertion du sous-ensemble le long de la direction longitudinale est un mouvement simple d'assem blage.

Avantageusement, le corps de préhension comporte l'organe d'appui externe.

Ainsi, la pièce de structure qui ne comporte pas l'organe d'appui externe est plus compacte.

De préférence, la poignée amovible comporte une agrafe fixée à la pièce de structure pour définir un logement de réception et de guidage en translation du verrou, l'agrafe faisant partie du sous-ensemble.

Une telle conception permet de garantir un bon guidage du verrou sur la pièce de structure.

Avantageusement, la pièce de structure et l'agrafe sont réalisées en un matériau métallique, l'agrafe étant soudée sur la pièce de structure.

Le soudage permet un maintien précis est stable dans le temps de l'assemblage de l'agrafe sur la pièce de structure. De plus, le verrou est guidé dans son mouvement de translation entre deux pièces métalliques qui vont très peu s'user dans le temps.

De manière avantageuse, le verrou est réalisé en un matériau métallique.

Ainsi, le verrou métallique se déplace en translation dans un guidage réalisé avec des pièces métalliques. Une telle construction est robuste et durable.

De préférence, le logement comporte une portion tubulaire qui s'étend le long de la direction longitudinale et dont une extrémité libre débouche sur la paroi avant pour former l'orifice d'introduction.

Une portion tubulaire est très résistante, notamment au niveau de l'organe d'appui externe, et permet d'entourer le sous-ensemble pour bien le maintenir en position, une fois celui-ci inséré dans le corps de préhension.

Avantageusement, le logement comporte deux rainures latérales supérieures et la pièce de structure comporte deux ailes latérales, les deux ailes latérales étant destinées à coulisser dans les deux rainures lors de l'insertion du sous-ensemble dans le logement.

Ainsi, le sous-ensemble est bien guidé lors de son insertion dans le corps de préhension et il est bien maintenu dans une direction transversale à la direction longitudinale, après l'insertion.

De préférence, la poignée amovible comporte un dispositif d'auto-verrouillage du sous-ensemble dans le corps de préhension en fin d'insertion.

Par dispositif d'auto-verrouillage, on comprend que le sous-ensemble et le corps de préhension sont solidarisés ensemble en fin d'insertion, sans ajout de pièce ou opération supplémentaire. Un tel dispositif est particulièrement économique.

De manière avantageuse, la pièce de structure comporte une lame munie d'une ouverture traversante et le logement comporte un ergot, la lame munie de l'ouverture traversante et l'ergot formant le dispositif d'auto-verrouillage du sous-ensemble dans le corps de préhension.

Avantageusement, la poignée amovible comporte des moyens de manoeuvre du verrou à genouillère comprenant un levier qui est monté mobile en rotation sur la pièce de structure et sur le corps de préhension.

De préférence, le logement comporte une portion en forme de U inversé qui s'étend le long de la direction longitudinale, ladite portion en forme de U inversé comprenant une ouverture inférieure d'introduction du levier.

Avantageusement, les moyens de manoeuvre du verrou à genouillère comportent une bielle et un ressort de compression formant le moyen de mise en pression.

La poussée du ressort sur le verrou s'effectue selon la direction longitudinale lorsque le verrou est en position fermé. Cette disposition permet d'adapter la position du verrou à l'épaisseur et à la longueur de l'extrémité libre.

L'invention concerne également un récipient de cuisson comportant une paroi latérale qui est prolongée vers le haut par une portion recourbée vers l'extérieur comportant une extrémité libre munie d'une arête supérieure et d'une arête inférieure et une poignée amovible telle que précédemment décrite.

### Brève description des figures

On comprendra mieux les buts, aspects et avantages de la présente invention, d'après la description donnée ci-après d'un mode particulier de réalisation de l'invention présenté à titre d'exemple non limitatif, en se référant aux dessins annexés dans lesquels :
La figure 1 est une vue en perspective d'une poignée amovible agencée sur un récipient de cuisson selon un mode particulier de réalisation de l'invention, le verrou étant en position fermée;
La figure 2 est une vue en perspective de la poignée amovible agencée sur un récipient de cuisson de la figure 1, le verrou étant en position ouverte;
La figure 3 est une vue en coupe de la poignée amovible suivant le plan de coupe vertical médian III-III de la figure 1;
La figure 4 est une vue en coupe de la poignée amovible suivant le plan de coupe vertical médian IV-IV de la figure 2;
La figure 5 est une vue en perspective du corps de préhension de la poignée amovible illustrée à la figure 1 ;
La figure 6 est une vue en perspective du dessous du sous-ensemble formé par la pièce de structure, l'agrafe, le verrou et la bielle de la poignée amovible illustrée à la figure 1 ;
La figure 7 est une vue en perspective du dessus du sous-ensemble illustrée à la figure 6.

Seuls les éléments nécessaires à la compréhension de l'invention ont été représentés. Pour faciliter la lecture des dessins, les mêmes éléments portent les mêmes références d'une figure à l'autre.

On notera que dans ce document, les termes "horizontal", "vertical", "inférieur", "supérieur", « haut », « bas », "avant", "arrière", « longitudinal », « transversal », employés pour décrire la poignée amovible font référence à cette poignée amovible en situation d'usage, lorsqu'elle est assemblée sur un récipient de cuisson qui repose à plat sur un plan de travail.

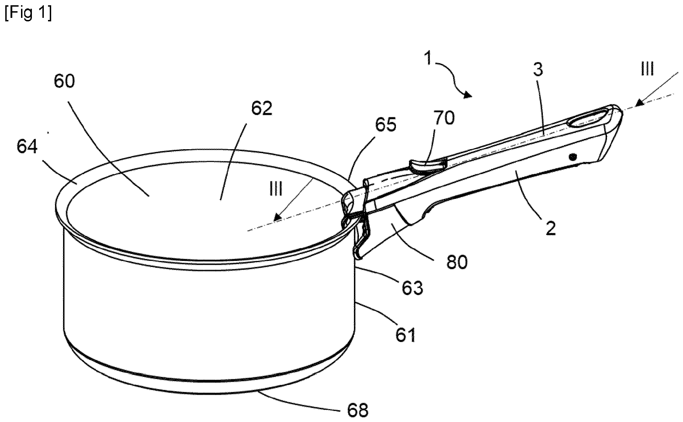

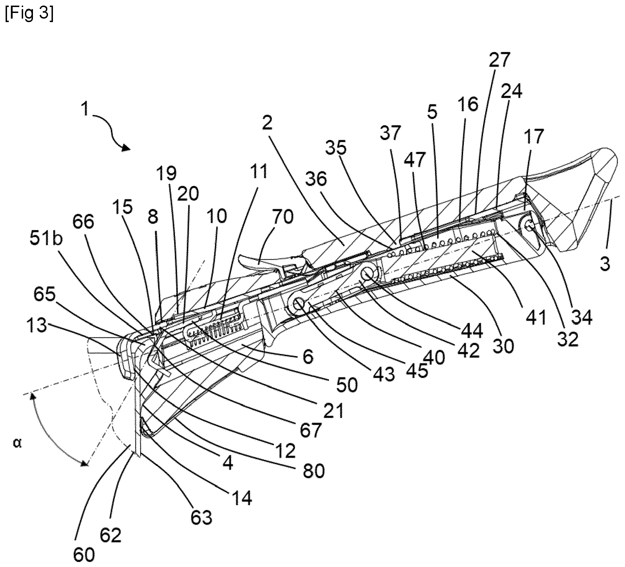

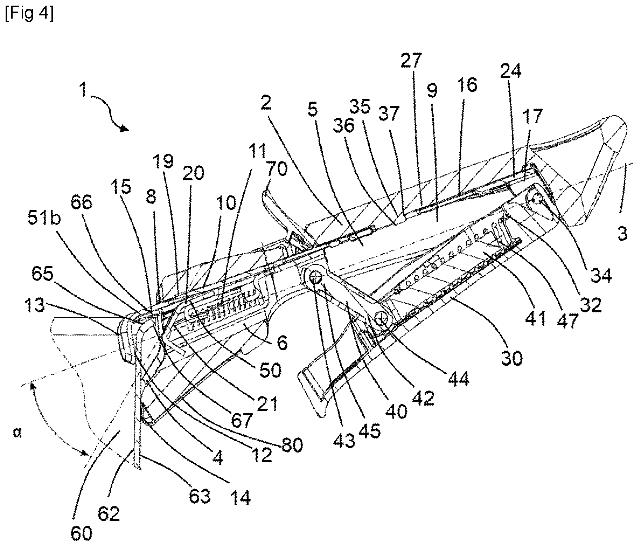

Tel que visible aux figures 1 à 4, une poignée amovible 1 est destinée à coopérer avec un récipient de cuisson 60 qui comprend une paroi de fond 68 horizontale, une paroi latérale 61 se dressant depuis la paroi de fond 68, et une portion recourbée 64 qui s'étend vers l'extérieur. La paroi latérale 61 comporte une surface intérieure 62 et une surface extérieure 63. La portion recourbée 64 prolonge la paroi latérale 61 et délimite l'ouverture supérieure du récipient de cuisson 60. La portion recourbée 64 comprend une extrémité libre 65 munie d'une arête supérieure 66 et d'une arête inférieure 67 (Fig. 3 et 4). Les arêtes supérieure 66 et inférieure 67 sont de préférence superposées dans un plan vertical.

La poignée amovible 1 s'étend selon une direction longitudinale 3. La poignée amovible 1 comporte un corps de préhension 2 qui comprend, à une extrémité avant dirigée vers le récipient de cuisson 60, une face avant 4 comportant un organe d'appui externe 14 destiné à coopérer avec la surface extérieure 63 de la paroi latérale 61. Dans un plan de coupe vertical orienté selon la direction longitudinale 3 (Fig. 3 et 4), l'organe d'appui externe 14 est sensiblement vertical. Le corps de préhension 2 comporte un renfort métallique 80 qui fait office de pare flamme et qui comprend l'organe d'appui externe 14. La poignée amovible 1 comporte un plan médian vertical qui s'étend le long de la direction longitudinale 3 et qui forme un plan de symétrie pour la poignée amovible 1.

Conformément aux figures 3, 4, 6 et 7, la poignée amovible 1 comporte une agrafe 50 qui est réalisée en matériau métallique. L'agrafe 50 comprend deux pattes 51a, 51b agencées de part et d'autre d'un plan médian vertical. Les deux pattes 51a, 51b forment un organe d'appui supérieur 15 destinée à coopérer avec l'arête supérieure 66 de l'extrémité libre 65 (Fig. 3). Les deux pattes 51a, 51b s'étendent le long de la direction longitudinale 3, au niveau de l'extrémité avant.

La poignée amovible 1 comporte une pièce de structure 10 qui est réalisée en matériau métallique. La pièce de structure 10 est sensiblement plane et comporte une patte d'extrémité 13. La patte d'extrémité 13 s'étend vers le bas et comporte une paroi interne formant un organe d'appui interne 12 destiné à coopérer avec la surface intérieure 62 de la paroi latérale 61.

L'organe d'appui interne 12 et l'organe d'appui externe 14 sont décalées selon la direction longitudinale 3 (Fig.3) pour permettre l'introduction de la paroi latérale 61 et de l'extrémité libre 65 lors de l'assemblage de la poignée amovible 1 sur le récipient de cuisson 60.

La poignée amovible 1 comporte un organe de verrouillage formé par un verrou 20 mobile en translation selon la direction longitudinale 3 entre une position ouverte (Fig.4) et une position fermée (Fig.3). Le verrou 20 comporte à une extrémité avant une paroi de blocage 21. Tel que visible à la figure 4, dans la position ouverte du verrou 20, la paroi de blocage 21 est destinée à être éloignée de l'organe d'appui supérieur 15 pour permettre l'introduction de la paroi latérale 61 entre les organes d'appui interne 12 et externe 14 et permettre à l'arête supérieure 66 de l'extrémité libre 65 de venir contre l'organe d'appui supérieur 15.

Tel que visible à la figure 3, dans la position fermée du verrou 20, la paroi de blocage 21 est destinée à prendre appui contre l'arête inférieure 67 de l'extrémité libre 65 et ainsi bloquer l'arête supérieure 66 contre l'organe d'appui supérieur 15. Dans un plan de coupe vertical comprenant la direction longitudinale 3, une droite appartenant à la paroi de blocage 21 et la direction longitudinale forment un angle α compris entre 40 et 50°, de préférence 45°.

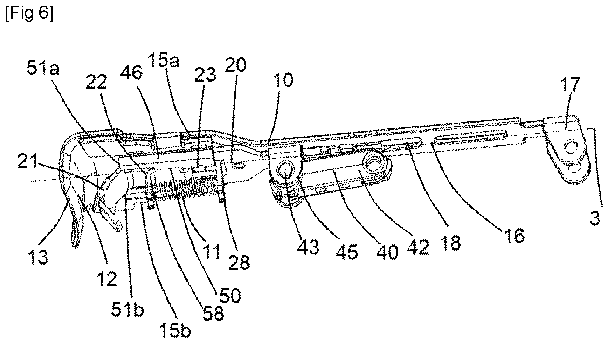

Tel que visible à la figure 6, la poignée amovible 1 comporte un moyen de rappel du verrou 20 disposé entre une patte 58 portée par l'agrafe 50 et une butée 28 portée par le verrou 20. Le moyen de rappel est formé par un ressort 11. Le ressort 11 travaille en compression lorsque le verrou 20 est en position fermée. Le ressort 11 est adapté à appliquer une force de rappel sur la butée 28 pour entraîner le verrou 20 vers sa position ouverte.

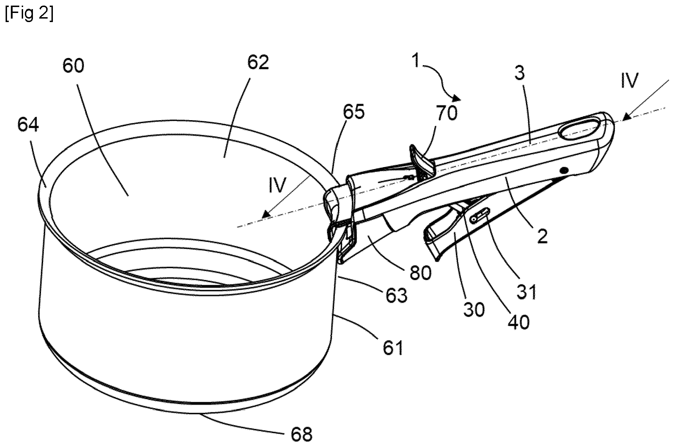

Conformément aux figures 3 et 4, La poignée amovible 1 comporte des moyens de déplacement de l'organe de verrouillage formés par le verrou 20. Les moyens de déplacement comportent un levier 30 qui est monté pivotant sur la pièce de structure 10 et le corps de préhension 2 autour d'un axe 34 de pivotement s'étendant selon une direction transversale, perpendiculaire à la direction longitudinale 3, et une bielle 40 qui permet le déplacement du verrou 20 quand le levier 30 est pivoté. La bielle 40 est montée de façon pivotante, par une première extrémité 45 au verrou 20 autour d'un axe 43, et par une seconde extrémité 42 au levier 30 autour d'un axe 44 qui est monté coulissant dans une ouverture oblongue 31 réalisée dans le levier 30 (Figure 2).

Le levier 30 est mobile entre une position de fermeture et une position d'ouverture en passant par une position intermédiaire d'équilibre instable. Dans la position de fermeture du levier 30, le verrou 20 est en position fermée et dans la position d'ouverture du levier 30, le verrou 20 est dans la position ouverte. En outre, les moyens de déplacement comprennent également un ressort 47 qui est disposé sur une tige 41. L'axe 44 est inséré dans la tige 41 et dans l'ouverture oblongue 31. Le ressort 47 est monté coulissant sur la tige 41 et en appui sur une paroi transversale 32 du levier 30. Ce ressort 47 de compression repousse l'axe 44 via la tige 41 pour permettre un ajustement de la position du verrou 20 en position fermée à l'épaisseur de la paroi latérale 61 du récipient de cuisson 60.

Conformément à la figure 3, dans la position de fermeture du levier 30, l'axe 44 autour duquel la seconde extrémité 42 pivote est situé au-dessus d'une ligne passant par l'axe de pivotement 34 et l'axe 43. La seconde extrémité 42 est maintenue en contact de la pièce de structure 10 sous l'action du ressort 47 de compression. Ainsi, le verrou 20 reste naturellement dans sa position fermée, sans que l'utilisateur ait à maintenir un quelconque effort sur la poignée amovible 1. La position intermédiaire d'équilibre instable du levier 30 est atteinte lorsque l'axe 44 autour duquel la seconde extrémité 42 pivote, est déplacé sous la ligne passant par l'axe de pivotement 34 et l'axe 43.

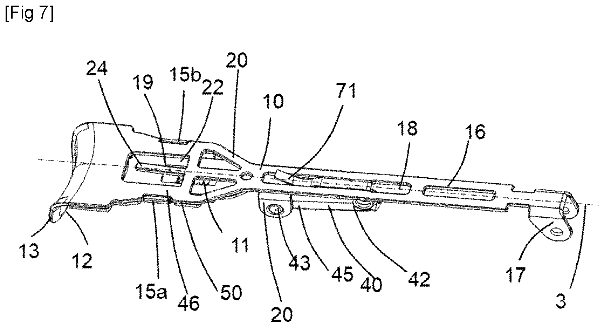

Tel que visible aux figures 6 et 7, la pièce de structure 10, l'agrafe 50 et le verrou 20 forment un sous-ensemble. Le verrou 20 comporte une portion centrale 22 sensiblement plane qui s'étend selon la direction longitudinale 3. L'agrafe 50 coiffe la portion centrale 22 du verrou 20 et est fixée à la pièce de structure 10 par soudage laser. L'agrafe 50 et la pièce de structure 10 forment un logement 23 de réception et de guidage en translation du verrou 20. Le sous-ensemble comporte également le ressort 11, la bielle 40 et l'axe 43.

La pièce de structure 10 munie de l'agrafe 50 comporte une partie 46 munie de deux ailes latérales 15a, 15b (Fig. 7) agencées à proximité de la patte d'extrémité 13. La pièce structure 10 comporte une partie prenant la forme d'une lame 16 qui s'étend le long de la direction longitudinale 3 à partir de la partie 46 munie des deux ailes latérales 15a, 15b jusqu'à une extrémité arrière qui comprend une chape 17 en forme de U inversée. La lame 16 comporte une ouverture traversante 18, agencée à proximité de l'extrémité arrière. La pièce de structure 10 comporte une patte 19 (Fig. 7) munie d'une extrémité libre 24 déformée vers le haut, transversalement à la direction longitudinale 3.

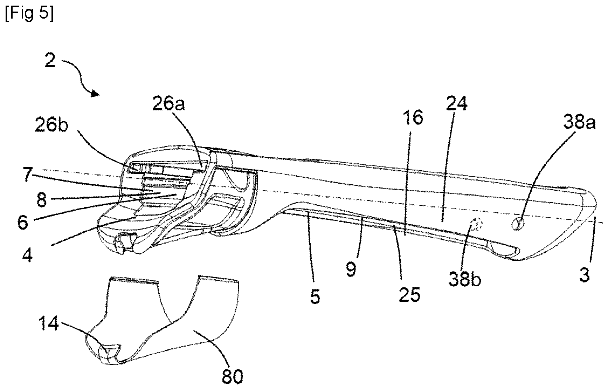

Tel que visible à la figure 5, le corps de préhension 2 comporte un logement 5 de réception du sous-ensemble. Le logement 5 comporte une portion tubulaire 6 qui s'étend le long de la direction longitudinale 3 et dont une extrémité libre 7 débouche sur la face avant 4 pour former un orifice 8 d'introduction. L'orifice 8 d'introduction est agencé au-dessus de l'organe d'appui externe 14. Le logement 5 comporte une portion en forme de U inversé 9 qui s'étend le long de la direction longitudinale 3 dans le prolongement de la portion tubulaire 6. La portion en forme de U inversé 9 comprend une ouverture inférieure 25 d'introduction et de réception du levier 30. Le logement 5 dans la portion tubulaire 6 comporte deux rainures 26a, 26b latérales supérieures qui s'étendent le long de la direction longitudinale 3. Les deux ailes latérales 15a, 15b de la pièce de structure 10 sont destinées à coulisser dans les deux rainures 26a, 26b lors de l'insertion du sous-ensemble dans le logement 5, plus particulièrement dans la portion tubulaire 6. Le logement 5 comporte une face supérieure 27 munie d'un ergot 35 (Fig. 3 et 4). L'ergot 35 est agencé dans la portion en forme de U inversé 9. L'ergot 35 comporte une face inclinée 36 destinée à faire fléchir élastiquement la lame 16 lors de l'assemblage jusqu'à ce que l'ergot 35 pénètre dans l'ouverture traversante 18 en fin d'insertion. L'ergot 35 comporte une face verticale 37 qui coopère avec l'ouverture traversante 18 pour empêcher l'extraction du sous-ensemble du corps de préhension 2. La lame 16 munie de l'ouverture traversante 18 et l'ergot 35 forment un dispositif d'auto-verrouillage du sous-ensemble dans le corps de préhension 2. L'assemblage du levier 30 est réalisé par l'insertion selon une direction transversale, perpendiculaire à la direction longitudinale 3 de l'axe 34 dans deux perforations 38a, 38b (Fig. 5) du corps de préhension 2, dans la chape 17 et dans le levier 30. Un tel assemblage assure le maintien en position de l'ergot 35 dans l'ouverture traversante 18.

Tel que visible sur les figures 1 à 4, la poignée amovible 1 comprend un bouton d'ouverture 70 qui permet de faire passer le levier 30 initialement dans sa position de fermeture au-delà de sa position intermédiaire d'équilibre instable. Le bouton d'ouverture 70 est agencé sur une face supérieure du corps de préhension 2. Le bouton d'ouverture 70 est mobile en rotation autour d'un axe transversal, horizontal à la direction longitudinale 3 de la poignée amovible 1. Le bouton d'ouverture 70 est mobile entre une position abaissée de repos dans laquelle le levier 30 est dans sa position de fermeture, une position relevée intermédiaire dans laquelle le levier 30 est dans sa position intermédiaire d'équilibre instable et une position relevée dans laquelle le levier 30 est dans sa position d'ouverture.

Un ressort de maintien 71 (Fig. 7) du bouton d'ouverture 70 dans sa position relevée est agencé sur la pièce de structure 10.

Pour assembler la poignée amovible 1, Le bouton d'ouverture 70 et le renfort métallique 80 sont agencés sur le corps de préhension 80. Puis, on réalise un sous-ensemble en positionnant sur la pièce de structure 10 le verrou 20 et en coiffant la portion centrale 22 du verrou 20 avec l'agrafe 50. L'agrafe 50 et la pièce de structure 10 sont solidarisées par soudage laser. Le sous-ensemble est complété avec le ressort 11, la bielle 40 et l'axe 43. Le sous-ensemble est ensuite inséré par l'orifice 8 dans le logement 5 du corps de préhension 2. Les deux ailes latérales 15a, 15b de la pièce de structure 10 coulissent dans les deux rainures 26a, 26b et la lame 16 est déformée vers le bas en glissant le long de la face inclinée 36 de l'ergot 35. En fin d'insertion, l'ergot 35 pénètre dans l'ouverture traversante 18 et l'extrémité libre 24 déformée vers le haut de la patte 19 vient en appui sur la face supérieure 27 du logement 5 pour rattraper les jeux entre les deux ailes latérales 15a, 15b et les deux rainures 26a, 26b. Le levier 30 muni de la tige 41 et du ressort 47 est inséré dans la portion en U inversée 9 puis l'axe 34 est glissé dans les deux perforations 38a, 38b du corps de préhension 2, dans la chape 17 et de manière serrante dans le levier 30. L'assemblage est terminé en insérant l'axe 44 dans l'ouverture oblongue 31 et de manière serrante dans la tige 41. Ainsi, l'assemblage de la poignée amovible 1 est réalisé par une succession d'opérations qui peuvent être faites de manière automatisée.

Bien entendu, l'invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention.

Ainsi, dans une variante de réalisation non représentée, l'agrafe comporte deux pattes latérales et l'agrafe est assemblée sur la pièce de structure par sertissage des deux pattes sur la pièce de structure.

## Revendications

1. Poignée amovible (1) destinée à coopérer avec un récipient de cuisson (60) ayant une paroi latérale (61) qui est prolongée vers le haut par une portion recourbée (64) vers l'extérieur comportant une extrémité libre (65), ladite poignée amovible (1) s'étendant selon une direction longitudinale (3) et comprenant un organe d'appui interne (12) et un organe d'appui externe (14) destiné à venir contre, respectivement, une surface intérieure (62) et une surface extérieure (63) de la paroi latérale (61), ainsi qu'un organe d'appui supérieur (15) destiné à venir contre l'extrémité libre (65) de la portion recourbée (64), ladite poignée amovible (1) comprenant un verrou (20) mobile en translation entre une position ouverte et une position fermée, le verrou (20) comportant une paroi de blocage (21) destinée à être éloignée de l'organe d'appui interne (12) dans la position ouverte du verrou (20) et destinée à générer une force sur l'extrémité libre (65) dans la position fermée du verrou (20), sous l'action d'un moyen de mise en pression (47), ladite poignée amovible (1) comportant un corps de préhension (2) qui s'étend selon la direction longitudinale (3) et une pièce de structure (10) qui comporte l'organe d'appui interne (12) et l'organe d'appui supérieur (15), **caractérisée en ce que** la pièce de structure (10) et le verrou (20) forment un sous-ensemble et **en ce que** le corps de préhension (2) comporte un logement (5) de réception du sous-ensemble, le logement (5) comprenant un orifice (8) d'introduction agencé dans une face avant (4) du corps de préhension (2) et dimensionné pour permettre l'assemblage du sous-ensemble dans le corps de préhension (2) par insertion le long de la direction longitudinale (3).

2. Poignée amovible (1) selon la revendication 1, **caractérisée en ce que** le corps de préhension (2) comporte l'organe d'appui externe (14).

3. Poignée amovible (1) selon l'une quelconque des revendications 1 à 2, **caractérisée en ce qu'**elle comporte une agrafe (50) fixée à la pièce de structure (10) pour définir un logement (23) de réception et de guidage en translation du verrou (20), l'agrafe (50) faisant partie du sous-ensemble.

4. Poignée amovible (1) selon la revendication 3, **caractérisée en ce que** la pièce de structure (10) et l'agrafe (50) sont réalisées en un matériau métallique, l'agrafe (50) étant soudée sur la pièce de structure (10).

5. Poignée amovible (1) selon l'une quelconque des revendications 1 à 4, **caractérisée en ce que** le logement (5) comporte une portion tubulaire (6) qui s'étend le long de la direction longitudinale (3) et dont une extrémité libre (7) débouche sur la face avant (4) pour former l'orifice (8) d'introduction.

6. Poignée amovible (1) selon l'une quelconque des revendications 1 à 5, **caractérisée en ce que** le logement (5) comporte deux rainures (26a, 26b) latérales supérieures et **en ce que** la pièce de structure (10) comporte deux ailes latérales (15a, 15b), les deux ailes latérales (15a, 15b) étant destinées à coulisser dans les deux rainures (26a, 26b) lors de l'insertion du sous-ensemble dans le logement (5).

7. Poignée amovible (1) selon l'une quelconque des revendications 1 à 6, **caractérisée en ce qu'**elle comporte un dispositif d'auto-verrouillage (16, 35) du sous-ensemble dans le corps de préhension (2) en fin d'insertion.

8. Poignée amovible (1) selon l'une quelconque des revendications 1 à 7, **caractérisée en ce qu'**elle comporte des moyens de manoeuvre du verrou (20) à genouillère comprenant un levier (30) qui est monté mobile en rotation sur la pièce de structure (10) et sur le corps de préhension (2).

9. Poignée amovible (1) selon la revendication 8, **caractérisée en ce que** le logement (5) comporte une portion en forme de U inversé (9) qui s'étend le long de la direction longitudinale (3), ladite portion en forme de U inversé (9) comprenant une ouverture inférieure (25) d'introduction du levier (30).

10. Poignée amovible (1) selon l'une quelconque des revendications 8 à 9, **caractérisée en ce que** les moyens de manoeuvre du verrou (20) à genouillère comportent une bielle (40) et un ressort (47) de compression formant le moyen de mise en pression.

11. Ensemble formé par au moins un récipient de cuisson (60) comportant une paroi latérale (61) qui est prolongée vers le haut par une portion recourbée (64) vers l'extérieur comportant une extrémité libre (65) munie d'une arête supérieure (66) et d'une arête inférieure (67) et une poignée amovible (1) selon l'une quelconque des revendications 1 à 10.

## Patentansprüche

1. Abnehmbarer Griff (1), der dazu vorgesehen ist, mit einem Kochbehälter (60) zusammenzuwirken, der eine Seitenwand (61) aufweist, die durch einen nach außen gekrümmten Abschnitt (64) nach oben verlängert ist, umfassend ein freies Ende (65), wobei der abnehmbare Griff (1) sich in einer Längsrichtung (3) erstreckt und ein inneres Auflageorgan (12) und ein äußeres Auflageorgan (14) umfasst, die dazu vorgesehen sind, an einer Innenfläche (62) bzw. einer Außenfläche (63) der Seitenwand (61) anzuliegen, sowie ein oberes Auflageorgan (15), das dazu vorgesehen ist, am freien Ende (65) des gekrümmten Abschnitts (64) anzuliegen, wobei der abnehmbare Griff (1) eine zwischen einer offenen Position und einer geschlossenen Position translatorisch mobile Verriegelung (20) umfasst, wobei die Verriegelung (20) eine Arretierungswand (21) umfasst, die dazu vorgesehen ist, in der offenen Position der Verriegelung (20) vom inneren Auflageorgan (12) entfernt zu sein, und dazu vorgesehen ist, unter der Einwirkung eines Druckbeaufschlagungsmittels (47) in der geschlossenen Position der Verriegelung (20) eine Kraft auf das freie Ende (65) zu erzeugen, wobei der abnehmbare Griff (1) einen Greifkörper (2), der sich in der Längsrichtung (3) erstreckt, und ein Strukturteil (10) umfasst, das das innere Auflageorgan (12) und das obere Auflageorgan (15) umfasst, **dadurch gekennzeichnet, dass** das Strukturteil (10) und die Verriegelung (20) eine Unterbaugruppe bilden und dadurch, dass der Greifkörper (2) einen Sitz (5) zur Aufnahme der Unterbaugruppe umfasst, wobei der Sitz (5) eine Einführungsaussparung (8) umfasst, die in einer Vorderseite (4) des Greifkörpers (2) eingerichtet ist und so bemessen ist, dass sie den Zusammenbau der Unterbaugruppe im Greifkörper (2) durch Einsetzen in der Längsrichtung (3) ermöglicht.

2. Abnehmbarer Griff (1) nach Anspruch 1, **dadurch gekennzeichnet, dass** der Greifkörper (2) das äußere Auflageorgan (14) umfasst.

3. Abnehmbarer Griff (1) nach einem der Ansprüche 1 bis 2, **dadurch gekennzeichnet, dass** er eine am Strukturteil (10) befestigte Klammer (50) umfasst, um einen Sitz (23) zur Aufnahme und translatorischen Führung der Verriegelung (20) zu definieren, wobei die Klammer (50) zur Unterbaugruppe gehört.

4. Abnehmbarer Griff (1) nach Anspruch 3, **dadurch gekennzeichnet, dass** das Strukturteil (10) und die Klammer (50) aus einem metallischen Material hergestellt sind, wobei die Klammer (50) auf das Strukturteil (10) geschweißt ist.

5. Abnehmbarer Griff (1) nach einem der Ansprüche 1 bis 4, **dadurch gekennzeichnet, dass** der Sitz (5) einen rohrförmigen Abschnitt (6) umfasst, der sich in der Längsrichtung (3) erstreckt und bei dem ein freies Ende (7) in die Vorderfläche (4) mündet, um die Einführungsaussparung (8) zu bilden.

6. Abnehmbarer Griff (1) nach einem der Ansprüche 1 bis 5, **dadurch gekennzeichnet, dass** der Sitz (5) zwei obere seitliche Nuten (26a, 26b) umfasst und dadurch, dass das Strukturteil (10) zwei Seitenflügel (15a, 15b) umfasst, wobei die zwei Seitenflügel (15a, 15b) dazu vorgesehen sind, beim Einsetzen der Unterbaugruppe in den Sitz (5) in den zwei Nuten (26a, 26b) zu gleiten.

7. Abnehmbarer Griff (1) nach einem der Ansprüche 1 bis 6, **dadurch gekennzeichnet, dass** er eine Vorrichtung zur Selbstverriegelung (16, 35) der Unterbaugruppe im Greifkörper (2) bei Abschluss des Einsetzens umfasst.

8. Abnehmbarer Griff (1) nach einem der Ansprüche 1 bis 7, **dadurch gekennzeichnet, dass** er Mittel zur Handhabung der Verriegelung (20) mit Kniehebel umfasst, umfassend einen Hebel (30), der drehbeweglich auf dem Strukturteil (10) und auf dem Greifkörper (2) montiert ist.

9. Abnehmbarer Griff (1) nach Anspruch 8, **dadurch gekennzeichnet, dass** der Sitz (5) einen Abschnitt in Form eines umgedrehten U (9) umfasst, der sich in der Längsrichtung (3) erstreckt, wobei der Abschnitt in Form eines umgedrehten U (9) eine untere Einführungsöffnung (25) des Hebels (30) umfasst.

10. Abnehmbarer Griff (1) nach einem der Ansprüche 8 bis 9, **dadurch gekennzeichnet, dass** die Mittel zur Handlung der Verriegelung (20) mit Kniehebel ein Pleuel (40) und eine Druckfeder (47) umfassen, die das Druckbeaufschlagungsmittel bilden.

11. Satz, der aus mindestens einem Kochbehälter (60) gebildet ist, der eine Seitenwand (61) umfasst, die durch einen nach außen gekrümmten Abschnitt (64) nach oben verlängert ist, umfassend ein freies Ende (65), das mit einer oberen Kante (66) und einer unteren Kante (67) und einem abnehmbaren Griff (1) nach einem der Ansprüche 1 bis 10 versehen ist.

## Claims

1. Removable handle (1) intended to engage with a cooking vessel (60) having a side wall (61) which is extended upwards by a portion (64) curved upwards comprising a free end (65), said removable handle (1) extending in a longitudinal direction (3) and comprising an internal support member (12) and an external support member (14) intended to come against, respectively, an inner surface (62) and an outer surface (63) of the side wall (61), as well as an upper support member (15) intended to come against the free end (65) of the curved portion (64), said removable handle (1) comprising a lock (20) which is mobile in translation between an open position and a closed position, the lock (20) comprising a blocking wall (21) intended to be extended from the internal support member (12) in the open position of the lock (20) and intended to generate a force on the free end (65) in the closed position of the lock (20), under the action of a pressurising means (47), said removable handle (1) comprising a gripping body (2) which extends in the longitudinal direction (3) and a structural part (10) which comprises the internal support member (12) and the upper support member (15), **characterised in that** the structural part (10) and the lock (20) form a subassembly and **in that** the gripping body (2) comprises a housing (5) for receiving the subassembly, the housing (5) comprising an introduction orifice (8) arranged in a front face (4) of the gripping body (2) and sized to enable the assembly of the subassembly in the gripping body (2) by insertion along the longitudinal direction (3).

2. Removable handle (1) according to claim 1, **characterised in that** the gripping body (2) comprises the external support member (14).

3. Removable handle (1) according to any one of claims 1 to 2, **characterised in that** it comprises a clip (50) fixed to the structural part (10) to define a housing (23) for receiving and guiding in translation the lock (20), the clip (50) forming part of the subassembly.

4. Removable handle (1) according to claim 3, **characterised in that** the structural part (10) and the clip (50) are made of a metal material, the clip (50) being welded on the structural part (10).

5. Removable handle (1) according to any one of claims 1 to 4, **characterised in that** the housing (5) comprises a tubular portion (6) which extends along the longitudinal direction (3) and a free end (7) of which opens onto the front face (4) to form the introduction orifice (8).

6. Removable handle (1) according to any one of claims 1 to 5, **characterised in that** the housing (5) comprises two upper side grooves (26a, 26b) and **in that** the structural part (10) comprises two side vanes (15a, 15b), the two side vanes (15a, 15b) being intended to slide in the two grooves (26a, 26b) during the insertion of the subassembly in the housing (5).

7. Removable handle (1) according to any one of claims 1 to 6, **characterised in that** it comprises a device (16, 35) for self-locking the subassembly in the gripping body (2) at the end of insertion.

8. Removable handle (1) according to any one of claims 1 to 7, **characterised in that** it comprises means for maneuvering the toggle-type lock (20) comprising a lever (30) which is mounted mobile in rotation on the structural part (10) and on the gripping body (2).

9. Removable handle (1) according to claim 8, **characterised in that** the housing (5) comprises an inverted U-shaped portion (9) which extends along the longitudinal direction (3), said inverted U-shaped portion (9) comprising a lower opening (25) for introducing the lever (30).

10. Removable handle (1) according to any one of claims 8 to 9, **characterised in that** the means for maneuvering the toggle-type lock (20) comprise a connecting rod (40) and a compression spring (47) forming the pressurising means.

11. Assembly formed by at least one cooking vessel (60) comprising a side wall (61) which is extended upwards by a portion (64) curved outwards comprising a free end (65) provided with an upper ridge (66) and a lower ridge (67) and a removable handle (1) according to any one of claims 1 to 10.
